# EUROPEAN PATENT APPLICATION

(11) **EP 2 141 037 A1**
(43) Date of publication of application: **06.01.2010**
(21) Application number: 08159648.8
(22) Date of filing: 03.07.2008
(51) Int. Cl.: B60H 1/00

(54) **Air mixing and distribution box for air conditioning system**

(71) Applicant: Delphi Technologies, Inc., Troy, Michigan 48007 (US)
(72) Inventor: PIHET, David, 54560, Beuvillers (FR)
(74) Representative: Robert, Vincent

(57) **Abstract**

An air conditioning air flow mixing and distribution box for use in a vehicle air conditioning system, said box comprising a front wall having an inlet and a valve, a rear wall having an outlet and a valve, a bottom wall having an inlet and a valve, a top wall having an outlet and a valve, and two lateral walls; the box further comprising inside its walls a mixing area where air flows mix. A lateral wall is provided with a bump-out forming a corridor extending from the bottom inlet to the top outlet, and is creating an air bypass channel integral to the box and adjacent to the mixing area for diverting from the incoming hot air flow a fraction flow away from the mixing area and for conducting it close to the top outlet.

## Description

### TECHNICAL FIELD

The present invention relates to vehicle air conditioning systems.

### BACKGROUND OF THE INVENTION

Air conditioning systems equip vehicles since many years. An air conditioning system generally comprises a fluid circuit and an air circuit. The air circuit comprises, as main components, a fan, a heat exchanger, several air channels connected to an air mixing and distribution assembly. As the comfort demand increases the technology evolves to provide new functions (e.g. split temperatures for driver and passengers). A constant challenge is to distribute the air flow at the desired temperature, in the desired vehicle area. For instance, warm air has to be sent upward toward the wind shield for anti-frost purposes, while cold air flow is often desired downward in the feet area. The multiple functions associated to a large variety of interior vehicle geometries, from small car to large monospace, have driven to design, as part of the air conditioning system, new and complex air mixing and distribution assemblies. This assembly is basically a box, i.e. air mixing and distribution box, having inlets and outlets controlled by piloted valves for adjusting the air delivery (e.g. temperature, direction and quantity) to the user's demand. The heart of this key sub-system is the mixing area, located inside of the mixing and distribution box, where an incoming cold air flow mixes with an incoming hot air flow to create an outgoing warm air flow of the desired temperature. The warm air flow is then distributed in the vehicle via appropriate channels.

The mixing and distribution of air flows in currently designed boxes is not optimized. The initial problem is due to the natural stratification of the air flows. The cold air and the hot air barely mix with each other remaining in layers of cold air and of hot air. The poor mix of air in the mixing area has created a first problem being the difficulty to drive warm air in certain areas of the vehicle (e.g. upward toward the wind shield for anti frost).

A first solution to force some warm air toward specific outlets is disclosed in DE-10039282. To do so a tube portion is installed inside the mixing area, and captures some hot air in the appropriate layer and conducts this captured hot air toward the desired outlet of the mixing and distribution box. Therefore the tube portion installed inside the mixing area, creates an obstacle to the incoming cold air flow and, when the incoming cold air flow hits the obstacle, turbulences occur, generating unpleasant noise while still preventing an optimum mix of the cold air with the hot air.

The present invention proposes to solve these problems of air mix quality, of warm air distribution, and of acoustic thanks to a new design of a mixing and distribution box exempt from obstacles.

### SUMMARY OF THE INVENTION

An air conditioning air flow mixing and distribution box for use in a mixing and distribution assembly of a vehicle air conditioning system, said mixing and distribution box comprising a front wall provided with at least one front inlet with an opening controlled by an inlet valve to control an incoming cold air flow, a bottom wall provided with at least one bottom inlet with an opening controlled by an inlet valve to control an incoming hot air flow, a top wall opposite to the bottom wall, provided with at least one top outlet with an opening controlled by an outlet valve to control an outgoing air flow; the mixing and distribution box further comprising inside its walls an air mixing area where incoming air flows mix before exiting the box through at least the top outlet and, according to a first feature of the invention, a lateral wall is provided with a bump-out forming a corridor extending substantially from the bottom inlet to the vicinity of the top outlet, said corridor creating an air bypass channel integral to the mixing and distribution box and adjacent to the mixing area for diverting from the incoming hot air flow a fraction flow away from the mixing area and for conducting the fraction flow toward the outgoing air flow, above the mixing area close to the top outlet and;
According to a second feature of the invention, the bypass channel comprises a bypass inlet integral to the bottom inlet;
According to an other feature of the invention, the opening section of the bottom inlet comprising the bypass inlet is larger than the opening section of the front inlet;
According to an other feature of the invention, the bypass channel comprises a bypass outlet located inside the mixing and distribution box in the near vicinity of the top outlet;
According to an other feature of the invention, the bypass channel and the mixing area are separated by a separation wall extending from the bypass inlet to the bypass outlet;
According to an other feature of the invention, the separation wall is in surface continuity with the adj acent portion of the lateral wall;
According to an other feature of the invention, the bypass channel is open toward the mixing area all along the corridor such that the bypass channel and the mixing area are not separated by a wall;
According to an alternative feature of the invention, the mixing and distribution box comprises a first compartment and a second compartment separated by an internal split wall substantially parallel and in-between the lateral walls, each compartment having independent inlets and outlets, and each compartment comprising at least in one lateral wall a bypass channel as described previously;
A vehicle air conditioning system comprising an air flow mixing and distribution assembly, **characterized in that** the mixing and distribution assembly comprises the mixing and distribution box according to anyone of the preceding claims.

### BRIEF DESCRIPTION OF THE DRAWINGS

The present invention is now described by way of example with reference to the accompanying drawings in which:
Figure 1 is a perspective view of a mixing and distribution assembly according to a first embodiment of the present invention.
Figure 2 is an inside lateral view of the mixing and distribution box.
Figure 3 is an inside front view of the mixing and distribution box.
Figure 4 is an inside front view of the mixing and distribution box having two separate compartments according to the third embodiment.
Figure 5 is detailed top view for the hot inlet following section A-A of Figure 3.

### DESCRIPTION OF THE PREFERRED EMBODIMENTS

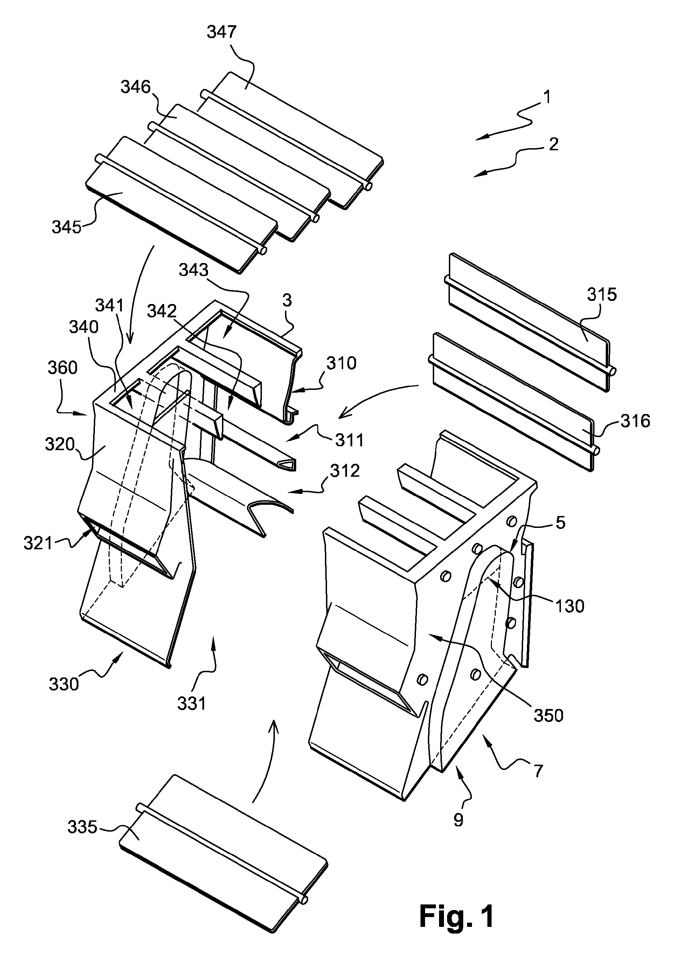

The structure of a first embodiment of the present invention will now be described and illustrated by Figures 1, 2, 3 and 5.

To clarify the description and ease the understanding, the description hereafter used directions commonly utilized (i.e. top, bottom, front, rear, lateral). This should not be interpreted as a limitation to the present invention.

A vehicle air conditioning system 1 comprises an air mixing and distribution assembly 2 itself comprising a mixing and distribution box 3 having substantially the geometry of a parallelogram with six walls: a front wall 310, a rear wall 320, a bottom wall 330, a top wall 340 and two opposite lateral walls 350 and 360.

The front wall 310 is provided with two cold inlets 311 and 312 and on which are respectively positioned two cold inlet valves 315 and 316.

The rear wall 320 is provided with a rear outlet 321, on which is positioned an outlet valve 325.

The bottom wall 330 is provided with a hot inlet 331 on which is positioned a hot inlet valve 335.

The top wall 340 is provided with three outlets: a front outlet 341, a middle outlet 342 and a rear outlet 343 on which are respectively positioned three valves 345 346 and 347.

All inlets and outlets are substantially rectangular with their respective main axis perpendicular to the lateral walls 350 and 360. The length of each inlet and outlet is parallel to the main axis and extends from almost one lateral wall, e.g. 350, to almost the opposite lateral wall e.g. 360.

All valves are rectangular and pivotal valves piloted in rotation along the main axis of the inlet, or the outlet, they are controlling.

In the lateral wall 350 is operated a bump-out 5, forming a channel substantially vertical, extending in length from the bottom wall 330 to the vicinity of the top wall 340 and having, at the level of bottom wall 330, a cross section comprising the extremity of the hot inlet 331. The bump-out 5 forms a bypass channel 7 integral to the mixing and distribution box 3. The bypass channel 7 has an inlet 9 and an outlet 11. As mentioned above, the bypass inlet 9 is integral to the hot inlet 331. The bypass outlet 11 is inside the mixing and distribution box 3, in the vicinity of the top wall 340 at the top extremity of the bump-out 5.

The lateral wall 360 is flat and substantially parallel to the lateral wall 350.

The hot inlet 331 extends from the lateral wall 350 to the opposite lateral wall 360 and includes the inlet 9 of the bypass channel 7. The cold inlets 311 and 312 extend from the lateral wall 350 to the opposite one 360 and do not include any part of the bump out corridor 5. Therefore, the hot inlet 331 is lengthier than the cold inlets 311 and 312.

To bring in or to distribute air flows, all inlets and outlets are connected to specific air channels (not represented).

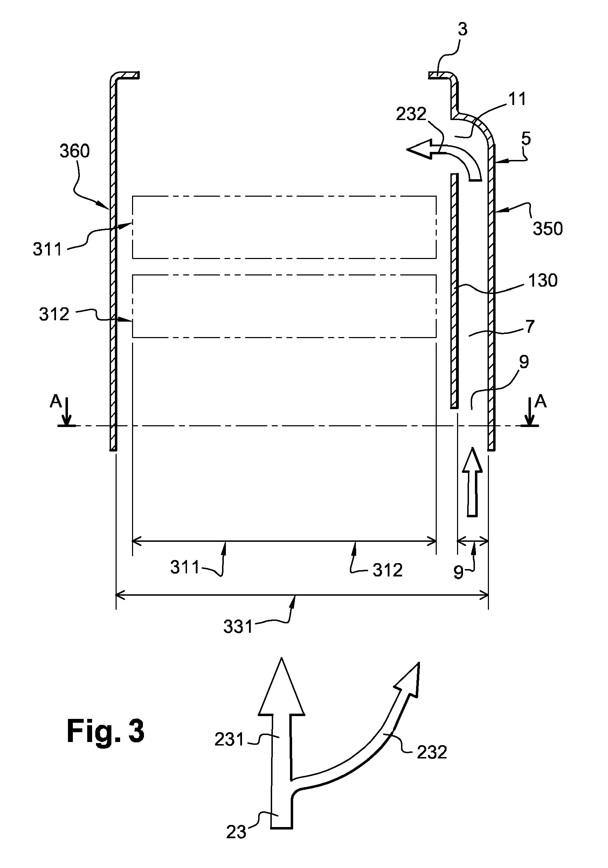

In the first embodiment a separation wall 130, as represented on Figure 3, separates the bypass channel 7 from the internal volume of the mixing and distribution box 3. The separation wall 130 and the adjacent portions of the lateral wall 350 are in surface continuity and can be made integrally with the other walls.

The separation wall 130 extends from the bottom wall 330 to the vicinity of the upper wall 340 slightly before the upper end of the bump-out corridor 5.

In the close vicinity of the hot inlet valve 335 a cut-off of a quarter of a circle is operated in the separation wall 130 to enable the rotation of the hot inlet valve 335.

According to a second embodiment of the present invention, there is no separation wall to isolate the bypass 7 from the internal volume of the mixing and distribution box 3. The bypass channel 7 is integral and open to the mixing and distribution box 3. In this second embodiment, the bypass channel 7 is delimited by the bump-out 5 formed in the lateral wall 350.

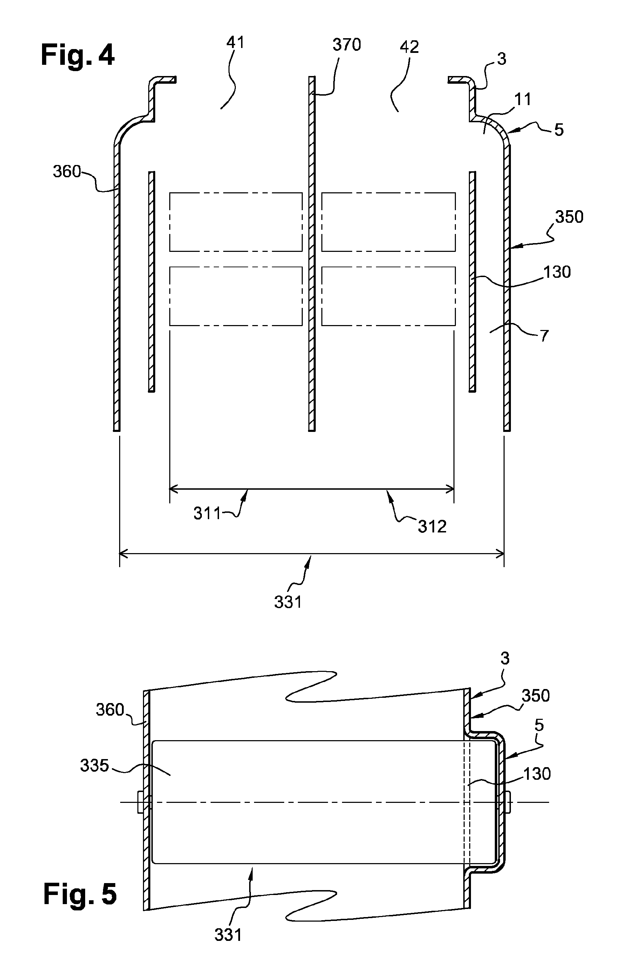

A third embodiment is a variant structure of any of the first or second embodiment previously described. As illustrated in Figure 4, the mixing and distribution box 3 comprises a left compartment 41, also called first compartment, and a right compartment 42, also called second compartment. The compartments are separated by a split wall 370, this in order to supply different air temperature in the left and in the right area of the vehicle. Each compartment is equipped with a bypass channel, symmetrically constructed from each other.

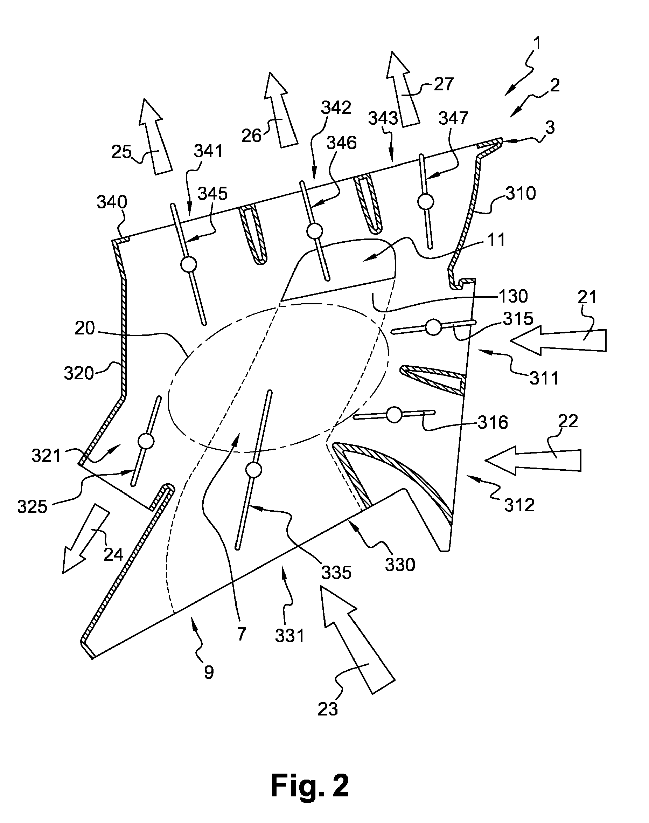

The operation of the first embodiment of the present invention will now be briefly discussed and illustrated by Figures 2 and 3.

A cold air flow 21, 22 enters the mixing and distribution box 3 via the front wall passing through the cold inlets 311 and 312.

A hot air flow 23 enters the mixing and distribution box 3 via the bottom wall passing through the hot inlet 331.

Due to the air flows velocity and the natural stratification, the cold and the hot air only mix in a limited region of the mixing and distribution box 3. This limited region, also called the mixing area 20, is confined in the middle of the mixing and distribution box 3. From bottom to top, the mixing area 20 extends from slightly below to slightly above the cold inlets 311 and 312. The cold 21, 22, and hot air flows 23 do not mix in the very near vicinity of the bottom wall 330 nor do they in the vicinity of the upper wall 340.

The incoming hot air flow 23 splits into a flow 231 entering the mixing area 20 and a fraction flow 232 entering the bypass channel 7 via the inlet 9. The hot flow 231 and the cold flows 21 and 22 mix in the mixing area 20 and create a mix air flow while the fraction flow 232 is directly conducted in the upper region of the mixing and distribution box 3 to warm-up the outgoing air flows 26 and 27 distributed through the outlets 342 and 343.

Advantageously, the present invention enables, depending on the positioning of the inlet and outlet valves and thanks to the bypass channel 7, to distribute in the vehicle air flows of different desired temperatures. As an example, the flow 24 may be selected relatively cold for the comfort in the feet area while at the same time, the flow 25 is selected warm for the region of the face and the flow 27 is selected much warmer for anti-frost of the wind shield.

Furthermore, the bump-out 5 forming the bypass channel 7 adjacent and outside the mixing area 20, advantageously enables a quiet functioning by freeing the mixing area from pipes and obstacles.

The operation principle of the second embodiment is similar to the operation of the first embodiment. The incoming hot air flow 23 splits into the flow 231, entering the mixing area, and the fraction flow 232 entering the bypass channel 7. The up-going fraction flow 232 and the air present into the mixing area barely mix because of the differences of velocity, of directions, of temperatures and also thanks to the bump-out 5 geometry. Therefore the fraction flow 232 is conducted to the upper region of the mixing and distribution box 3, above the mixing area 20.

The operation principle of the third embodiment is similar to the operation of the first embodiment, the left and right compartments, 41 and 42, operating independently, each one having the same operation principle as described for the first embodiment.

This description should not be interpreted as a limitation to the present invention. The man of the art will easily adapt the lessons learned from this description to variants such as a mixing and distribution box having a different number of inlets and outlets or differently located around the mixing and distribution box, or inlets and outlets with a different geometry, or valves operating as per an alternative principle.

## Claims

1. An air conditioning air flow mixing and distribution box (3) for use in a mixing and distribution assembly (2) of a vehicle air conditioning system (1), said mixing and distribution box (3) comprising:
a front wall (310) provided with at least one front inlet (311, 312) with an opening controlled by an inlet valve (315, 316) to control an incoming cold air flow (21, 22),
a bottom wall (330) provided with at least one bottom inlet (331) with an opening controlled by an inlet valve (335) to control an incoming hot air flow (23),
a top wall (340) opposite to the bottom wall (330), provided with at least one top outlet (341, 342, 343) with an opening controlled by an outlet valve (345, 346, 347) to control an outgoing air flow (25, 26, 27);
the mixing and distribution box (3) further comprising inside its walls an air mixing area (20) where incoming air flows (21, 22, 23) mix before exiting the box through at least the top outlet (341),
**characterized in that**
a lateral wall (350, 360) is provided with a bump-out (5) forming a corridor extending substantially from the bottom inlet (331) to the vicinity of the top outlet (341, 342, 343), said corridor creating an air bypass channel (7) integral to the mixing and distribution box (3) and adjacent to the mixing area (20) for diverting from the incoming hot air flow (23) a fraction flow (232) away from the mixing area (20) and for conducting the fraction flow (232) toward the outgoing air flow (25, 26, 27), above the mixing area (20) close to the top outlet (341, 342, 343).

2. The mixing and distribution box (3) according to claim 1 **characterized in that** the bypass channel (7) comprises a bypass inlet (9) integral to the bottom inlet (331).

3. The mixing and distribution box (3) according to claim 2 **characterized in that** the opening section of the bottom inlet (331) comprising the bypass inlet (9) is larger than the opening section of the front inlet (311, 312).

4. The mixing and distribution box (3) according to any of the preceding claim **characterized in that** the bypass channel (7) comprises a bypass outlet (11) located inside the mixing and distribution box (3) in the near vicinity of the top outlet (341, 342, 343).

5. The mixing and distribution box (3) according to claim 4, taken in combination with claim 2 or 3, **characterized in that** the bypass channel (7) and the mixing area (20) are separated by a separation wall (130) extending from the bypass inlet (9) to the bypass outlet (11).

6. The mixing and distribution box (3) according to claim 5 **characterized in that** the separation wall (130) is in surface continuity with the adjacent portion of the lateral wall (350).

7. The mixing and distribution box (3) according to claim 4, taken in combination with claim 2 or 3, **characterized in that** the bypass channel (7) is open toward the mixing area all along the corridor such that the bypass channel (7) and the mixing area (20) are not separated by a wall.

8. The mixing and distribution box (3) according to anyone of the preceding claims further comprising a first compartment (41) and a second compartment (42) separated by an internal split wall (370) substantially parallel and in-between the lateral walls (350, 360), each compartment (41, 42) having independent inlets and outlets, **characterized in that** each compartment (41, 42) comprises in at least one lateral wall a bypass channel as described in previous claims.

9. A vehicle air conditioning system (1) comprising an air flow mixing and distribution assembly (2), **characterized in that** the mixing and distribution assembly (2) comprises the mixing and distribution box (3) according to anyone of the preceding claims.
